# EUROPEAN PATENT SPECIFICATION

(11) **EP 1 583 265 B1**
(45) Date of publication and mention of the grant of the patent: **12.12.2012**
(21) Application number: 04008013.7
(22) Date of filing: 01.04.2004
(51) Int. Cl.: H04W 24/06, H04B 17/00, H04B 7/005, H03J 3/04

(54) **Methods for calibrating a transmitter and a receiver path of a communication device and test system therefor**
Verfahren zur Kalibrierung der Sende- und Empfängerwege eines Kommunikationsgeräts, und Testsystem dafür
Procédés d'étalonnage des voies d'émission et de réception d'un dispositif de communication, et système de test correspondant

(43) Date of publication of application: 05.10.2005
(73) Proprietor: Intel Mobile Communications GmbH, 85579 Neubiberg (DE)
(72) Inventor: Gundersen, Poul, 8900 Randers (DK); Bundgaard, Peter, 9000 Aalborg (DK); Toftgaard, Jörn, 9260 Gistrup (DK); Fisker, Sören, 9000 Aaalborg (DK)
(74) Representative: Viering, Jentschura & Partner

(56) References cited:
- EP-A- 0 420 505
- EP-A- 0 420 507
- US-A1- 2001 018 333
- MAUCKSCH T: "MESSUNGEN AN BASIS- UND MOBILSTATIONEN MIT GSM-MESSPLATZ CMTA 94" NEUES VON ROHDE & SCHWARZ, ROHDE UND SCHWARZ, MUENCHEN, DE, vol. 132, no. 31, November 1990 (1990-11), pages 23-25, XP000893168 ISSN: 0548-3093

## Description

The invention relates to a method for calibrating a transmitter path of a wireless communication device, the communication device comprising an operational mode for bursted signals. The invention further relates to a method for calibrating a receiver path of a wireless communication device. The invention refers also to a test system for calibrating a communication device.

After assembly of a mobile communication device, the device has to perform an extensive testing procedure to ensure a correct functionality of the device. The communication device can be a mobile phone, a PDA or a notebook having a wireless LAN communication. Such mobile communication device to be tested is referenced hereafter by "device under test" or "DUT" as an abbreviation. The testing procedure is performed in a test system environment. The test system comprises a signal generator or a communication tester capable of generating RF signals.

Some tests require the generation of a signal according to a mobile communication standard. Transmitting such a signal is called signaling mode. The used communication standard can be GSM, WCDMA, Bluetooth, WLAN or the like.

For example the communication tester within the test system generates a signal according to the GSM mobile communication standard, if functionality of a receiver path of a GSM mobile is to be tested. The GSM mobile phone is the device under test and connected to the communication tester via a communication line. This communication line is used for test parameter exchange. Using the communication line the tester sends all parameters for the tests to be performed.

A test signal is then transmitted and received by the DUT. The device measures signal parameters of the test signal and demodulates the signal. Some signal parameters, for example frequency or power levels, are sent back to the communication tester via the communication line. The communication tester compares the signal parameters measured by the receiver of the DUT with the signal parameters transmitted to the DUT. It calculates calibration parameters dependent from the parameters of the received signal and the transmitted signal. The calibration parameters are stored in a memory within the mobile communication device. The stored parameters can be used later to calibrate and optimize the receiver path during normal operation mode of the device. In a similar way the transmitter path of the device under test is tested by generating a signal and transmitting the signal back to the communication tester.

In actual test systems, the device under test and the communication tester communicate with each other after having transmitted or received a test signal. After evaluation of the measured parameters of the test signal a new frequency or power level is selected and communicated over the communication line. The test will be repeated with the new test parameters. The use of the signaling mode and the communication between the DUT and the communication tester after each test of predetermined signal parameters results in a very slow testing procedure.

US 2001/0018333 A1 discloses a test system utilizing the device's frequency hopping capabilities, wherein a desired power level used for all frequencies is transmitted in advance to the test.

An object of this invention is to provide a method for calibrating the transmitter or receiver path of a mobile communication device, which allows a reduced testing time. A further object of the invention is to provide a test system having calibration cycle, which is performed in less time.

These objects are solved by the independent claims 1, 2 and 11, respectively.

In the following, examples (although indicated as embodiments) in the description and/or drawings which are not covered by the claims are presented not as embodiments of the invention but as background art or examples.

According to an embodiment of the invention a transmitter path of a communication device to be calibrated comprises an operating mode for bursted signals. Preferably it is designed to transmit a test signal according to a time division multiplexing transmission method. The communication device will referenced to as device under test or DUT. After having provided a communication tester comprising a test mode for measuring signal parameters of a received signal the DUT to be tested is provided. The device under test and the communication tester are connected together via a communication line. Then, a plurality of test parameters for signals to be transmitted during the test procedure are communicated between the DUT and the communication tester via the communication line. After exchanging the test parameters the DUT as well as the communication tester will follow a determined test procedure set forth by the test parameters. Then, the device under test is set into a test mode and the test sequence is started. The DUT starts transmitting a plurality of predetermined test signals according to the exchanged test parameters using a time division multiplexing transmission method. Thus, the DUT will transmit a plurality of different bursted test signals. Each burst is determined by a set of parameters and transmitted in a time slot. The communication tester receives the transmitted test signals. Then, the calibration parameters are calculated and stored in the communication device in such a way, that they can be used for calibrating and optimizing the transmitter path during normal operation.

Applying this method for calibrating a transmitter path significantly reduces the time for the test procedure. This is achieved by interchanging a plurality of test parameters for the test sequence between the DUT and the communication tester via the communication line before starting the test sequence. The communication device as well as the communication tester will follow determined rules and settings when transmitting or receiving test signals. These test signals are transmitted as a complete test sequence without the need for additional communication between the device under test and the tester during the test procedure.

In the invented method for calibrating a receiver path of a mobile communication device, a communication tester comprises a test mode for transmitting bursted test signals. These test signals are transmitted by the communication tester using a time division multiplexing transmission method. The device under test is provided and connected to the communication tester via a communication line. The invented method also comprises the step of exchanging a plurality of test parameters between the DUT and the communication tester via the communication line. The device under test is set into a test mode and a test sequence is started. The test sequence includes a plurality of test signals predetremined by the exchanged test parameters. The test signals are transmitted by the communication tester and received by the device under test. Finally, calibration parameters are calculated and stored in the communication device for calibrating and optimizing the receiver path during normal operation of the device.

In order to calibrate a receiver path of a communication device a plurality of test parameters are sent between DUT and communication tester before the test signals are transmitted. The communication device as well as the communication tester will follow those specifications determined by the test parameters. The test signals can be transmitted and received as a complete test sequence without stopping the sequence and communicating additional test parameters again.

It is preferable that the test signals are transmitted using a time division multiplexing transmission method according to the GSM mobile communication standard. Then test signals with a defined set of parameters are transmitted or received in each timeslot. In this embodiment of the invention the calibration procedure for the transmitter path of a wireless communication device uses the timeslots according to the GSM mobile communication standard when transmitting a test signal. Preferably test signals with different, but well determined RF parameters are transmitted in each timeslot specified by the GSM mobile communication standard. Other mobile communication standards a using time division multiplexing access method can be used as well. For example, the time slot structure of the Bluetooth or the 802.11 WLAN standard, can be used. The determined RF-parameter set forth by test parameters previously sent are preferable the power level and the signals' frequency.

In an embodiment of the invented method the step of communicating the plurality of test parameters comprises the steps of selecting at least one frequency in which the test signals have to be transmitted. Then a plurality of power levels for each selected frequency is also selected. The communication tester as well as a device under test use the same frequencies and same power levels determined by the plurality of test parameters. Hence additional communication or exchange of settings between the communication tester and the device under test is not necessary between the steps of transmitting or receiving the test sequence.

In a preferred embodiment of the invention the mobile device and the communication tester are connected by RS232 communication terminal to each other. Of course other communication lines like I2C bus or similar communication terminals can be used as well. In a preferred embodiment of the invention, it is the mobile device, which selects the frequency as well as different power levels for the transmitter path or the receiver path calibration procedure. It communicates the selected frequencies and power levels to the communication tester via the communication line.

In a further embodiment of the invention the mobile communication device comprises a non-signaling test mode of operation. In this non-signaling test mode the communication device transmits signals with data content different from the GSM mobile communication standard. Preferably test signals are used in the non-signaling mode, whose data content are optimized for the test or the calibration procedure to be performed. In an embodiment of this invention the data content of the signal is communicated between the communication tester and the DUT for a later calculation of the calibration parameters. Using a special non-signaling test mode will fasten the overall calibration procedure.

In another embodiment of the invention the device under test calculates the calibration parameters and stores the calculated calibration parameters in a memory within the mobile communication device. The embodiment is advantageous for receiver tests, because the measured parameters must not be sent back to the communication tester for calculating the calibration parameters. This will enhance the efficiency of the calibration procedure. In another embodiment measured signal parameters will be averaged to get smoother results and decrease any noise on the received signal.

A test system according to the invention comprises at least one mobile communication device to be tested. The actual device to be tested is called device under test or DUT in short form. The at least one communication device comprises a transmitter path and a receiver path. Furthermore it comprises a test operation mode. The transmitter path of the at least one communication device is designed to transmit signals according to a time division multiplexing transmission standard. It is therefore capable of transmitting bursted signals. The receiver path is designed to receive bursted signals. Preferably the communication device is designed to transmit and receive signals according to the GSM mobile communication standard. The test system comprises a communication tester, coupled to the device under test. The communication tester comprises a signal generator as well as a signal receiver. The signal generator and the signal receiver are designed to transmit or receiver bursted signals according to a time division multiplexing method. Preferably the communication tester comprises means for generating and transmitting signals and receiving signals according to the GSM mobile communication standard. The device under test and the communication tester are connected in a way to communicate and exchange a plurality of test parameters for a test sequence before starting the test sequence and the calibration procedure.

In a preferred embodiment the plurality of test parameters include power levels and frequency for the signal to be transmitted.

Preferably the signal generator is adopted to output a special predefined frame sequence starting with a synchronization burst according to the GSM communication standard to allow the device under test to synchronize itself with the burst during the test sequence of a receiver path.

In another embodiment of the invention the test system comprises a switching unit to connect a plurality of mobile communication devices to the communication tester. The switching unit can be controlled by the communication tester.

In the following the invention will be explained in greater detail by the accompanying figures showing various embodiments of the invention. The figures are simplified schematic representations presented for illustration purposes only and do not limit the invention.
Figure 1 shows a test system according to a first embodiment of the invention.
Figure 2 shows a test system according to a second embodiment of the invention.
Figure 3 shows a time power diagram used for the calibration procedure of the transmitter path.
Figure 4 shows an embodiment of the calibration procedure for the receiver path.

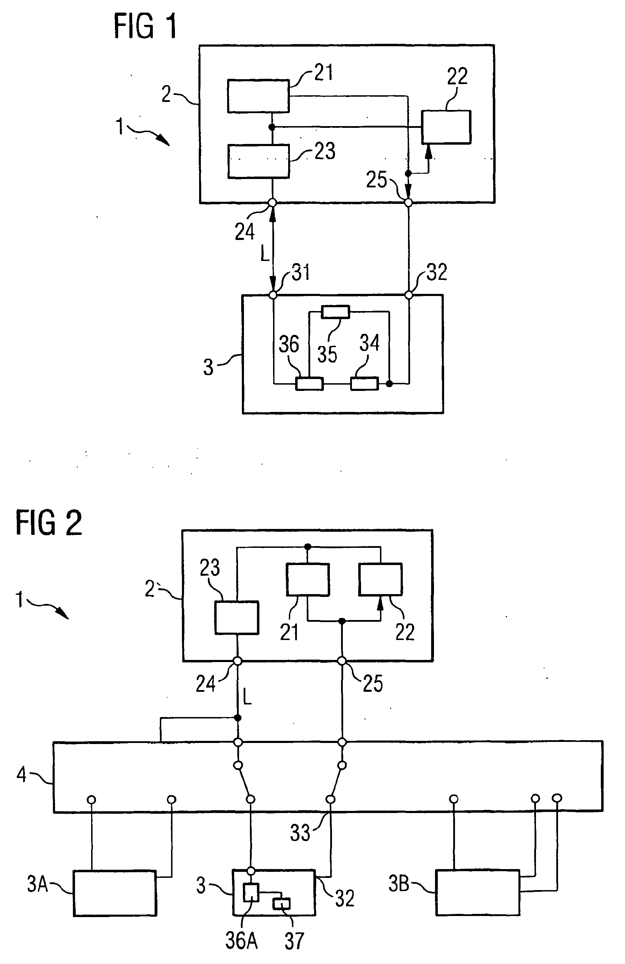

Figure 1 shows a test system according to the invention. Such a test system is used after production of the mobile communication device to test the functionality of the mobile communication device and perform the necessary calibration tests. During such test procedures different RF parameters of the transmitter path and the receiver path of the communication device are measured, and calibration parameters are calculated out of the measurement results.

The calibration parameters are then stored in a memory within the mobile communication device in order to calibrate and optimize the transmitter or receiver path during normal operation. The RF-parameters used are, for example power level and frequency. For example, while using different power levels and frequencies for the signal to be transmitted the linearity of the main amplifier in the transmitter path can be tested. Any deviation in the linearity of the amplifier is measured, and calibration parameters are calculated and stored in the mobile communication device to compensate any non-linearity of the transmitter path. Tests, which measure the frequency of received signals are also used for transmitter tests, the receiver test and for the VCO in the receiver path to optimize the demodulation procedure of a received signal during normal operation.

The test system 1 comprises a communication tester unit 2 as well as a mobile communication device 3 to be tested. The tester unit 2 comprises a general purpose signal generator 21 capable of generating signals according to the GSM mobile communication standard. Other kinds of signals can also be generated. All signals generated by the signal generator 21 fulfil the RF and data content specification set by the GSM communication standard. The signal generator 21 is connected to the signal generator output terminal 25. The signal generator 21 is controlled by the control unit 23.

The control unit 23 is connected to the signal generator 21 and transmits all necessary parameters for signal generation to the generator 21. The control unit 23 is also connected to an input/output-(I/O)-terminal 24. Additionally, the communication tester 2 comprises a receiver 22. The receiver 22 is also connected to an terminal 25 for receiving RF signals, demodulating the received RF and measuring RF parameters. Thus the terminal 25 is adopted for transmitting and receiving signals. Besides measuring different RF parameters the receiver 22 is capable of demodulating a received signal according to a modulation type specified by a communication standard and analyzing the demodulated data content. The receiver 22 is also controlled by the control unit 23.

The mobile communication device 3 or the device under test, comprises a I/O terminal 31 which is connected to the communication I/O terminal 24 of the communication tester 2. It further comprises a terminal 33 representing transmitter output 33 and a receiver input 32. For example terminal 33 is an antenna or an antenna connection. The terminal 33 is connected to the terminal 25 of the communication tester 2. The transmitter output 33 is also connected to a transmitter path 34. The transmitter path 34 is adopted to generate signals according to at least the GSM mobile communication standard and to send them to the terminal 33 for transmitting. The mobile 3 also comprises a receiver path 35 connected to the terminal 32.

The receiver path 35 is capable of measuring different RF parameter of a received signal, for example its power level and its frequency. Furthermore the receiver path is designed to demodulate the received signal for further signal processing. The receiver and transmitter paths are controlled by a control unit 36. The control unit 36 is also connected to the communication I/O terminal 31.

The device under test 3 comprises at least two different modes of operation. In a normal operation mode, the device 3 transmits and receives signals according to the GSM mobile communication standard. Additionally the DUT can be adopted to receive and transmit signals according to the communication standards WCDMA, Edge, Bluetooth and WLAN and the like. However the mobile must transmit and receive bursted signals. In a second operation mode the mobile device receives or transmits signals for test purposes only. This operation mode is called test mode.

Some functionality tests to be performed by the mobile device acquire signal generation according to the GSM communication standard. This is called signaling mode. This mode is used for functionality tests, which include, for example identifying a base station, sending the correct identification signal or synchronization onto a base station. Other tests mainly for signal quality do not acquire a signaling test mode, but need nevertheless determined and well-defined data content. Such a mode is called non-signaling mode. The signal generator 21 of communication tester unit 2 and the transmitter path of the mobile communication device to be tested is capable of generating signals according to a signaling mode as well as to the non-signaling mode. The receiver 22 of the communication tester and the receiver path of the mobile device are designed to measure different RF-parameters and demodulate signals in the signaling and non-signaling test modes.

Before the transmitter test routine can be started, mobile 3 and communication tester 2 will communicate and exchange data over the communication line between the terminals 31 and 24. The DUT 3 sends different frequency values for which the test signals are going to be transmitted. Furthermore for each frequency a respective signal with six different power levels shall be transmitted. These power levels are also send to the communication tester 2 over the communication line.

For example the mobile 3 sends a list of four frequencies including the low GSM 850 channel, the low midband GSM 850 channel, the high midband GSM 850 channel and the high band GSM 850 channel. For each of those frequencies eight different power levels are preselected and send to the communication tester. The power level and the frequencies for the GSM 900, the GSM 1800 and the GSM 1900 band are also sent. In total 16 different frequencies with 8 power levels for each of the frequencies are sent to the communication tester 2 by the DUT 3. Those the plurality of the test signals to be transmitted according to the paramters is called test sequence for the transmitter path.

The control unit 23 of communication tester 2 receives the parameters indicating the frequencies and power levels for the test signals and stores them in an internal memory. Then it switches its receiver 22 to the first frequency and prepares for the test procedure. Therafter the test sequence is started. The transmitter path of the DUT will now transmit a first signal with the power levels and the frequencies according to the settings and sends them over terminal 32 to the receiver 22 of the communication tester 2. Each power level will be transmitted in a timeslot of a GSM frame according to the GSM standard.

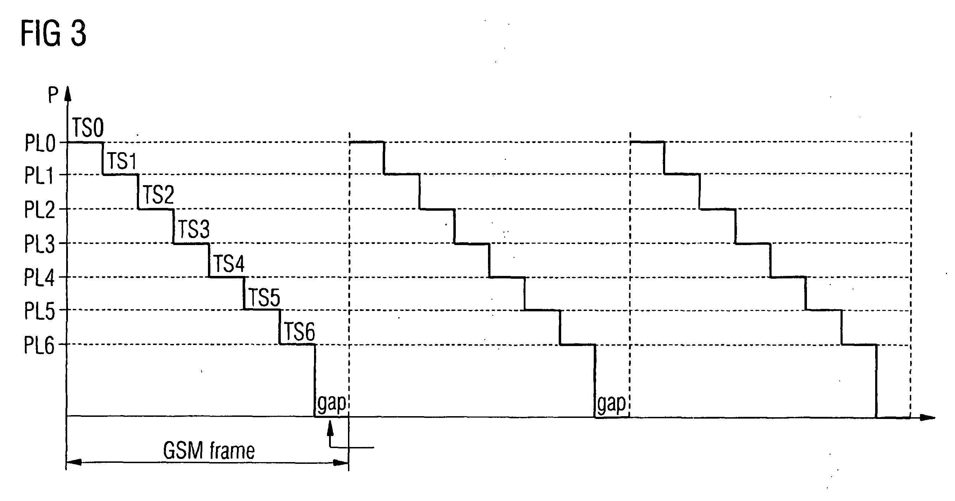

A diagram of transmission power versus time is shown in figure 3. As it can be seen a GSM-frame consists of eight timeslots TS0 to TS7 each approximately 560 µs. In each timeslot a signal with a different power level PL0 to PL6 is transmitted by the DUT. In this embodiment the power levels are decreasing compared to a previous timeslot of the GSM-frame, but other power levels can be selected. During the eightth timeslot TS7 the signal is blanked out by the DUT. The gap is used to change the first frequency to a second frequency. The second frequency is determined by the control unit of the DUT and corresponds to the second frequency exchanged with the communication tester before the test. The time span for the frequency change is one timeslot according to the GSM standard. During the same time the receiver in the communication device also changes its internal settings and prepares for receiving a test signal at the second frequency.

At the beginning of the second GSM-frame the DUT is settled to the new frequency and restarts transmitting test signals with different power levels in each timeslot of the second GSM frame. All signals are sent via terminal 32 to the communication tester. The terminal 32 is considered as the RF-terminal of transmitting and receiving signals. In the eightth timeslot of the second GSM frame it blanks out the signal and changes frequency again. This process is repeated with different frequencies until it is stopped. During transmission time the communication tester unit 2 records all measured power levels. Due to the transmission gap in the seventh timeslot of each GSM frame the communication tester 2 can synchronize itself for more accurate power measurements.

After recording and averaging the measured power levels, the communication tester 2 will calculate calibration values out of the measured results and the reference power levels transmitted before by the DUT over the communication line. The calibration values are fed back to the DUT and stored in a memory for calibration and optimizing the transmission path during normal operation.

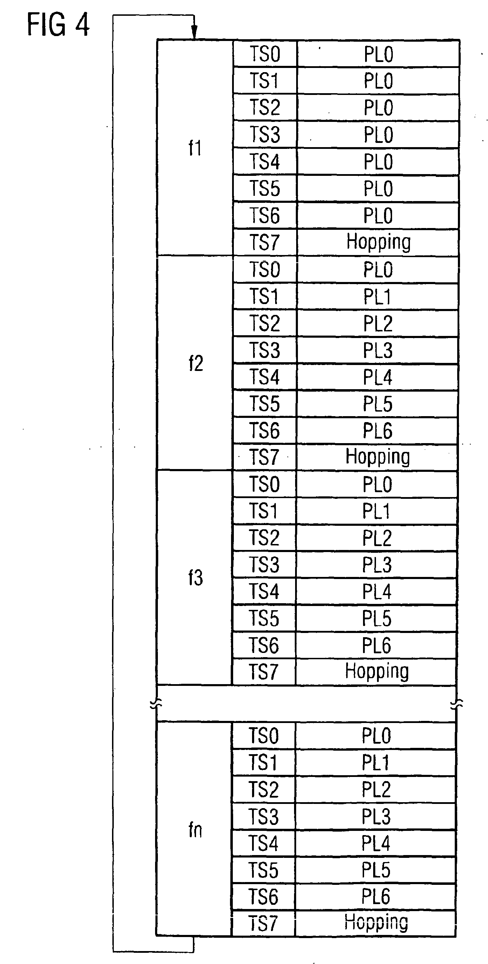

For the receiver test of the DUT the signal generator 21 of the communication tester unit 2 is set to the non-signaling mode. The signal generator 21 will be programmed to output a special predetermined sequence using the GSM timeslot structure. According to the GSM standard a GSM-frame consists of eight timeslots TS0 to TS7. A diagram with frequencies and power levels of the test sequence is shown in figure 4. The test sequence starts with a synchronization burst at the frequency f1 with the same power level and determined data content on each timeslot. This will allow the receiver path of the DUT to synchronize itself to the transmitted signal.

In the eightth timeslot TS7 of the first GSM frame the communication tester will change ist output frequency to the new frequency f2. Simultanously the receiver path prepares for receiving a signal on the frequency f2. At the beginning of the second GSM frame the communication tester 2 sends different power level PL0 to PL6 in the time slots TS0 to TS6. The test is repeated until it is stopped.

The parameters for the frequencies f1 to fn as well as the power levels PL0 to PL6 to be transmitted are exchanged between the DUT and the communication tester 2 before the test sequence is started. Therefore it is not necessary to stop the test sequence between different GSM-frames for communicating additional data. The power levels measured by the DUT are stored in a memory within the DUT. After the test is finished stored power levels are fed back to the communication test unit for calculating the calibration parameters.

The calibration procedure for the local oscillators of the DUT can be performed in a similar way. After exchanging all necessary parameters between the DUT and the communication tester, the DUT starts transmitting a burst at a defined GSM frequency and within a timeslot. Then it changes the frequency to the next channel and starts transmitting a burst again. Preferably the burst is transmitted longer than one timeslot to allow automatic synchronization. The communication tester measures the difference between the frequency of the transmitted signal and the frequency predetermined previous to the test. Based on the measured frequency error, the slope and frequency offsets can be calculated. The calculated values are stored in the memory of the DUT for compensating slope and frequency error.

By transmitting all necessary parameters to perform the transmitter or receiver test before starting the test, the time span for transmitting the signals and measuring the received signals can be significantly reduced. It is therefore not necessary to stop the test and exchange parameters for the next signals to be transmitted or received. Transmitting a synchronization burst at the beginning of the test sequence allows an automatic synchronization. The invented method is not restricted to mobile phones for the GSM communication standard. It can be used with every device comprising a time division transmission or receiving mode.

Figure 2 shows an example of a test system having a communication tester 2 and a plurality of communication devices 3, 3A and 3B. The communication devices are connected to a board 4, which is controlled by the control unit 23 of the communication tester 2. The board is adopted as a switching board and is connected to a plurality of mobile phones to be tested. Depending on a control signal the switching board 4 connects one device under test to the communication tester 2. Again the RF-connector 32 of each DUT is connected to an I/O terminal 33 of the switching board. The DUTs 3, 3A and 3B include circuits 36A and 37 for calculating and storing calibration parameters. Using a switching board will significantly reduce the time for the test procedures, because a DUT can be tested, while a second DUT calculates its calibration parameters out of the results of a previous measurement.

### REFERENCE LIST

- 1:: Test system
- 2:: Communication test unit
- 3:: Mobile station
- 21:: Signal generator
- 22:: Receiver unit
- 23:: Control unit
- 24:: Communication connection
- 25:: I/O terminal
- 31:: Communication connection
- 32:: DUT I/O terminal, antenna
- 33:: I/O terminal
- 34:: Transmitter path
- 35:: Receiver path
- 36:: Control unit
- PL0, ..., PL6:: Power levels
- TS0, ..., TS6:: Timeslots
- f1, ..., fN:: Frequencies

## Claims

1. A Method for calibrating a transmitter path (34) of a communication device (3), the transmitter path (34) capable of transmitting bursted signals, the method comprising the steps of:
Providing and preparing a communication tester (2) comprising a test mode for measuring parameters of a received signal;
Providing the communication device (3);
Connecting the communication device (3) to the communication tester (2) over a communication line (L);
Communicating a plurality of test parameters between the communication device (3) and the communication tester (2) through the communication line (L);
Setting the communication device (3) into a test mode after the communication of the plurality of test parameters between the communication device and the communication tester has been completed;
Transmitting a plurality of bursted test signals by the communication device (3), each bursted test signal determined by a set of test parameters and comprising a sequence of test signals having different power levels but the same frequency, the test parameters including the different power levels and wherein the test signals with different power levels are transmitted in different time slots of a GSM frame;
Receiving the plurality of transmitted test signals by the communication tester (2);
Calculating calibration parameters and storing the calculated parameters in the communication device (3) for optimizing the transmitter path (34).

2. Method for calibrating a receiver path (35) of a communication device (3), the method comprising the steps of:
Providing and preparing a communication tester (2) comprising a test mode for transmitting bursted signals;
Providing the communication device (3);
Connecting the communication device (3) and the communication tester (2) over a communication line (L);
Communicating a plurality of test parameters between the communication device (3) and the communication tester (2) through the communication line (L);
Setting the communication device (3) into a test mode after the communication of the plurality of test parameters between the communication device and the communication tester has been completed;
Transmitting a plurality of bursted test signals each bursted test signals according to one of the plurality of test parameters by the communication tester (2) and comprising a sequence of test signals having different power levels but the same frequency, the test parameters including the different power levels and wherein the test signals with different power levels are transmitted in different time slots of a GSM frame;
Receiving the plurality of transmitted test signals by the communication device (3);
Calculating calibration parameters and storing the calculated parameters in the communication device (3) for optimizing the receiver path (35).

3. Method of one of the claims 1 to 2,
wherein communicating test parameters comprises the step of:
selecting at least one frequency on which the test signals are transmitted;
selecting a plurality of power levels for each selected frequency.

4. Method of one of the claims 1 to 3,
wherein communicating test parameters comprises the step of:
sending a plurality of test parameter sets to the communication tester (2) by the communication device, each set comprising a frequency and at least one power level of the test signal.

5. Method of one of the claims 1 to 4,
wherein transmitting a plurality of bursted test signals comprises the step of:
transmitting a synchronization burst with a predefined data content, frequency and power level.

6. Method of one of the claims 1 to 5,
wherein transmitting a plurality of bursted test signals comprises the step of:
repeating the transmission of the plurality of bursted test signals until stopped.

7. Method of one of the claims 1 to 6,
wherein transmitting a plurality of bursted test signals comprises the step of:
setting a first frequency (f2) determined by the test parameters;
setting a first power level (PL0) determined by the test parameters;
transmitting a first bursted test signal with the first frequency (f2) and first power level (PL0);
setting at least one second power level (PL1) determined by the test parameters and transmitting an at least one second bursted signal with the first frequency (f2) and the at least one second power level (PL1);
blanking the signal and setting a second frequency (f3) determined by the test parameters.

8. Method of one of the claims 1 to 7,
wherein receiving the transmitted test signals comprises the steps of:
measuring a signal parameter of the received signal; averaging the signal parameter.

9. Method of one of the claims 1 to 8,
wherein receiving the transmitted test signals comprises the step of:
storing signal parameters of the received test signals in a memory.

10. Method of one of the claims 2 to 9,
wherein calculating calibration parameters comprises the step of:
sending a termination signal for stopping the transmission of the test signals through the communication line;
sending signal parameters of a received signal back to the communication tester through the communication line;
comparing the signal parameters sent through the communication line with test parameters.

11. Test system for calibrating a communication device, comprising:
at least one communication device (3) to be tested, said communication device (3) comprising a transmitter path (34) and a receiver path (35), further adopted for a test operation mode and a normal operation mode, the normal operation mode adopted for transmitting and receiving bursted signals;
a communication tester (2), comprising a signal generator (21) and a receiver unit (22), further adopted a test mode designed to transmit and receive bursted test signals comprising a sequence of test signals having different power levels but the same frequency wherein the test signals with different power levels are transmitted in different time slots of a GSM frame;
wherein the communication device and the communication tester (2) comprises means for communicating a plurality of test parameters for bursted test signals in the test operation mode before the test procedure is started, the test parameters including the different power levels,
wherein the at least one communication device (3) and the communication tester (3) is adopted for using bursted signals in the test operation mode.

## Patentansprüche

1. Verfahren zum Kalibrieren eines Senderpfads (34) einer Kommunikationsvorrichtung (3), wobei der Senderpfad (34) die Fähigkeit hat, gebündelte Signale zu übertragen, wobei das Verfahren die Schritte aufweist:
Bereitstellen und vorbereiten eines Kommunikationstesters (2), der einen Testmodus zum Messen von Parametern eines empfangenen Signals aufweist;
Bereitstellen der Kommunikationsvorrichtung (3);
Verbinden der Kommunikationsvorrichtung (3) mit dem Kommunikationstester (2) über eine Kommunikationsleitung (L) ;
Kommunizieren einer Mehrzahl von Test-Parametern zwischen der Kommunikationsvorrichtung (3) und dem Kommunikationstester (2) durch die Kommunikationsleitung (L) ;
Versetzen der Kommunikationsvorrichtung (3) in einen Testmodus nachdem die Kommunikation der Mehrzahl von Test-Parametern zwischen der Kommunikationsvorrichtung und dem Kommunikationstester abgeschlossen ist;
Übertragen einer Mehrzahl von gebündelten Testsignalen von der Kommunikationsvorrichtung (3), wobei jedes gebündelte Testsignal durch einen Menge von Test-Parametern bestimmt ist und eine Folge von Testsignalen mit unterschiedlichen Leistungspegeln aber der gleichen Frequenz aufweist, wobei die Testparameter die unterschiedlichen Leistungspegel enthalten und wobei die Testsignale mit unterschiedlichen Leistungspegeln in unterschiedlichen Zeitschlitzen eines GSM-Rahmens übertragen werden;
Empfangen der Mehrzahl von übertragenen Test-Signalen durch den Kommunikationstester (2);
Berechnen von Kalibrierungsparametern und speichern der berechneten Parameter in der Kommunikationsvorrichtung (3) zum Optimieren des Senderpfads (34).

2. Verfahren zum Kalibrieren eines Empfängerpfads (35) einer Kommunikationsvorrichtung (3), wobei das Verfahren die Schritte aufweist:
Bereitstellen und vorbereiten eines Kommunikationstesters (2), der einen Testmodus zum Übertragen von gebündelten Signalen aufweist;
Bereitstellen der Kommunikationsvorrichtung (3);
Verbinden der Kommunikationsvorrichtung (3) und des Kommunikationstesters (2) über eine Kommunikationsleitung (L);
Kommunizieren einer Mehrzahl von Test-Parametern zwischen der Kommunikationsvorrichtung (3) und dem Kommunikationstester (2) durch die Kommunikationsleitung (L);
Versetzen der Kommunikationsvorrichtung (3) in einen Testmodus nachdem die Kommunikation der Mehrzahl von Test-Parametern zwischen der Kommunikationsvorrichtung und dem Kommunikationstester abgeschlossen ist;
Übertragen einer Mehrzahl von gebündelten Testsignalen, jedes Testsignal gemäß einem der Mehrzahl von Test-Parametern von dem Kommunikationstester (2) und aufweisend eine Folge von Testsignalen mit unterschiedlichen Leistungspegeln aber der gleichen Frequenz, wobei die Testparameter die unterschiedlichen Leistungspegel enthalten und wobei die Testsignale mit unterschiedlichen Leistungspegeln in unterschiedlichen Zeitschlitzen eines GSM-Rahmens übertragen werden;
Empfangen der Mehrzahl von übertragenen Test-Signalen durch die Kommunikationsvorrichtung (3);
Berechnen von Kalibrierungsparametern und speichern der berechneten Parameter in der Kommunikationsvorrichtung (3) zum Optimieren des Empfängerpfads (35).

3. Verfahren gemäß einem der Ansprüche 1 bis 2,
wobei Kommunizieren von Test-Parametern den Schritt aufweist:
Auswählen mindestens einer Frequenz, auf der die Testsignale übermittelt werden;
Auswählen einer Mehrzahl von Leistungspegeln für jede ausgewählte Frequenz.

4. Verfahren gemäß einem der Ansprüche 1 bis 3,
wobei Kommunizieren von Test-Parametern den Schritt aufweist:
Senden einer Mehrzahl von Test-Parametermengen an den Kommunikationstester (2) von der Kommunikationsvorrichtung, wobei jede Menge eine Frequenz und mindestens einen Leistungspegel des Testsignals aufweist.

5. Verfahren gemäß einem der Ansprüche 1 bis 4,
wobei Übertragen einer Mehrzahl von gebündelten Testsignalen den Schritt aufweist:
Übertragen eines Synchronisation-Signalbündels mit einem vordefinierten Dateninhalt, vordefinierter Frequenz und vordefiniertem Leistungspegel.

6. Verfahren gemäß einem der Ansprüche 1 bis 5,
wobei Übertragen einer Mehrzahl von gebündelten Testsignalen den Schritt aufweist:
Widerholen der Übertragung der Mehrzahl von gebündelten Testsignalen bis es abgebrochen wird.

7. Verfahren gemäß einem der Ansprüche 1 bis 6,
wobei Übertragen einer Mehrzahl von gebündelten Testsignalen die Schritte aufweist:
Einstellen einer ersten Frequenz (f2), die durch die Test-Parameter festgelegt ist;
Einstellen eines ersten Leistungspegels (PL0), der durch die Test-Parameter festgelegt ist;
Übertragen eines ersten gebündelten Testsignals mit der ersten Frequenz (f2) und dem ersten Leistungspegel (PL0);
Einstellen mindestens eines zweiten Leistungspegels (PL1), der durch die Test-Parameter festgelegt ist, und übertragen mindestens eines zweiten gebündelten Signals mit der ersten Frequenz (f2) und dem mindestens einem zweiten Leistungspegel (PL1);
Ausblenden des Signals und einstellen einer zweiten Frequenz (f3), die durch die Test-Parameter festgelegt ist.

8. Verfahren gemäß einem der Ansprüche 1 bis 7,
wobei empfangen der übertragenen Testsignale die Schritte aufweist:
Messen eines Signalparameters des empfangenen Signals; Mitteln des Signalparameters.

9. Verfahren gemäß einem der Ansprüche 1 bis 8,
wobei empfangen des übertragenen Testsignals den Schritt aufweist:
Speichern von Signalparametern des empfangenen Testsignals in einem Speicher.

10. Verfahren gemäß einem der Ansprüche 2 bis 9,
wobei berechnen von Kalibrierungsparametern den Schritt aufweist:
Senden eines Abbruchsignals zum Beenden der Übertragung der Testsignale durch die Kommunikationsleitung;
Senden von Signalparametern eines empfangenen Signals zurück zu dem Kommunikationstester durch die Kommunikationsleitung;
Vergleichen der durch die Kommunikationsleitung gesendeten Signalparameter mit Test-Parametern.

11. Testsystem zum Kalibrieren einer Kommunikationsvorrichtung, aufweisend:
mindestens eine zu testende Kommunikationsvorrichtung (3), wobei die Kommunikationsvorrichtung (3) einen Senderpfad (34) und einen Empfängerpfad (35) aufweist und ferner eingerichtet ist für einen Testbetriebsmodus und einen normalen Betriebsmodus, wobei der normale Betriebsmodus eingerichtet ist zum Übertragen und Empfangen von gebündelten Signalen;
einen Kommunikationstester (2), der einen Signalgenerator (21) und eine Empfängereinheit (22) aufweist, ferner eingerichtet für einen Testmodus eingerichtet zum Übertragen und Empfangen von gebündelten Testsignalen, die eine Folge von Testsignalen mit unterschiedlichen Leistungspegeln aber der gleichen Frequenz aufweisen, wobei die Testsignale mit unterschiedlichen Leistungspegeln in unterschiedlichen Zeitschlitzen eines GSM-Rahmens übertragen werden;
wobei die Kommunikationsvorrichtung und der Kommunikationstester (2) Mittel zum Kommunizieren einer Mehrzahl von Testparametern für gebündelte Testsignale in dem Testbetriebsmodus bevor die Testprozedur gestartet wird, aufweisen, wobei die Test-Parameter unterschiedliche Leistungspegel aufweisen,
wobei die mindestens eine Kommunikationsvorrichtung (3) und der Kommunikationstester (3) zum Verwenden von gebündelten Signalen in dem Testbetriebsmodus eingerichtet sind.

## Revendications

1. Procédé d'étalonnage d'un chemin (34) d'émetteur d'un dispositif (3) de communication, le chemin (34) d'émetteur étant apte à transmettre des signaux en rafale, le procédé comprenant les stades dans lesquels :
on se procure et on prépare un testeur (2) de communication, comprenant un mode de test pour mesurer des paramètres d'un signal reçu ;
on se procure le dispositif (3) de communication ;
on relie le dispositif (3) de communication au testeur (2) de communication par une ligne (L) de communication ;
on communique une pluralité de paramètres de test entre le dispositif (3) de communication et le testeur (2) de communication par la ligne (L) de communication ;
on met le dispositif (3) de communication dans un mode de test, après que la communication de la pluralité de paramètres de test entre le dispositif de communication et le testeur de communication a été achevée ;
on émet une pluralité de signaux de test en rafale par le dispositif (3) de communication, chaque signal de test en rafale étant déterminé par un jeu de paramètres de test et comprenant une séquence de signaux de test ayant des niveaux de puissance différents mais la même fréquence, les paramètres de test comprenant les niveaux de puissance différents et les signaux de test ayant des niveaux de puissance différents étant émis dans des créneaux temporels différents d'une trame GSM ;
on reçoit la pluralité de signaux de test émis par le testeur (2) de communication ;
on calcule des paramètres d'étalonnage et on mémorise les paramètres calculés dans le dispositif (3) de communication pour optimiser le chemin (34) d'émetteur.

2. Procédé d'étalonnage d'un chemin (35) de récepteur d'un dispositif (3) de communication, le procédé comprenant les stades dans lesquels :
on se procure et on prépare un testeur (2) de communication, comprenant un mode de test pour émettre des signaux d'émission en rafale ;
on se procure le dispositif (3) de communication ;
on relie le dispositif (3) de communication au testeur (2) de communication par une ligne (L) de communication ;
on communique une pluralité de paramètres de test entre le dispositif (3) de communication et le testeur (2) de communication par la ligne (L) de communication ;
on met le dispositif (3) de communication dans un mode de test, après que la communication de la pluralité de paramètres de test entre le dispositif de communication et le testeur de communication a été achevée ;
on émet une pluralité de signaux de test en rafale par le testeur (2) de communication, chaque signal de test en rafale suivant l'un de la pluralité de paramètres de test et comprenant une séquence de signaux de test ayant des niveaux de puissance différents mais la même fréquence, les paramètres de test comprenant les niveaux de puissance différents et les signaux de test ayant des niveaux de puissance différents étant émis dans des créneaux temporels différents d'une trame GSM ;
on reçoit la pluralité de signaux de test émis par le dispositif (3) de communication ;
on calcule des paramètres d'étalonnage et on mémorise les paramètres calculés dans le dispositif (3) de communication pour optimiser le chemin (35) de récepteur.

3. Procédé suivant l'une des revendications 1 à 2,
dans lequel communiquer les paramètres de test comprend le stade dans lequel :
on sélectionne au moins une fréquence sur laquelle les signaux de test sont émis ;
on sélectionne une pluralité de niveaux de puissance pour chaque fréquence sélectionnée.

4. Procédé suivant l'une des revendications 1 à 3,
dans lequel communiquer des paramètres de test comprend le stade dans lequel :
on envoie une pluralité de jeux de paramètres de test au testeur (2) de communication par le dispositif de communication, chaque jeu comprenant une fréquence et au moins un niveau de puissance du signal de test.

5. Procédé suivant l'une des revendications 1 à 4,
dans lequel émettre une pluralité de signaux de test en rafale comprend le stade dans lequel :
on émet une rafale de synchronisation ayant un contenu de données, une fréquence et un niveau de puissance définis à l'avance.

6. Procédé suivant l'une des revendications 1 à 5,
dans lequel émettre une pluralité de signaux de test en rafale comprend le stade dans lequel :
on répète la transmission de la pluralité de signaux de test en rafale jusqu'à l'arrêt.

7. Procédé suivant l'une des revendications 1 à 6,
dans lequel transmettre une pluralité de signaux de test en rafale comprend le stade dans lequel :
on établit une première fréquence (f2) déterminée par les paramètres de test ;
on établit un premier niveau (PL0) de puissance déterminé par les paramètres de test ;
on émet un premier signal de test en rafale ayant la première fréquence (f2) et le premier niveau (PL0) de puissance ;
on établit au moins un deuxième niveau (PL1) de puissance déterminé par les paramètres de test et on émet un au moins un deuxième signal en rafale ayant la première fréquence (f2) et le au moins un deuxième niveau (PL1) de puissance ;
on efface le signal et on établit une deuxième fréquence (f3) déterminée par les paramètres de test.

8. Procédé suivant l'une des revendications 1 à 7,
dans lequel recevoir les signaux de test émis comprend les stades dans lesquels :
on mesure un paramètre du signal reçu; on fait la moyenne du paramètre du signal.

9. Procédé suivant l'une des revendications 1 à 8,
dans lequel recevoir les signaux de test émis comprend le stade dans lequel :
on mémorise des paramètres des signaux de test reçus dans une mémoire.

10. Procédé suivant l'une des revendications 2 à 9,
dans lequel calculer des paramètres d'étalonnage comprend le stade dans lequel :
on envoie un signal de terminaison pour arrêter la transmission des signaux de test par la ligne de communication;
on renvoie des paramètres du signal reçu au testeur de communication par la ligne de communication ;
on compare les paramètres de signal envoyés par la ligne de communication à des paramètres de test.

11. Système de test pour étalonner un dispositif de communication, comprenant :
au moins un dispositif (3) de communication à tester, le dispositif (3) de communication comprenant un chemin (34) d'émetteur et un chemin (35) de récepteur, agencé, en outre, pour un mode de fonctionnement de test et pour un mode de fonctionnement normal, le mode de fonctionnement normal étant agencé pour émettre et recevoir des signaux en rafale,
un testeur (2) de communication, comprenant un générateur (21) de signal et une unité (22) réceptrice, agencé, en outre, pour un mode de test conçu pour émettre et recevoir des signaux de test en rafale, comprenant une séquence de signaux de test ayant des niveaux de puissance différents mais la même fréquence, les signaux de test ayant des niveaux de puissance différents étant émis dans des créneaux temporels différents d'une trame GSM ;
dans lequel le dispositif de communication et le testeur (2) de communication comprennent des moyens de communication d'une pluralité de paramètres de test pour des signaux de test en rafale dans le mode de fonctionnement en test avant que la procédure de test ait commencé, les paramètres de test comprenant les niveaux de puissance différents,
dans lequel le au moins un dispositif (3) de communication et le testeur (3) de communication sont agencés pour utiliser des signaux en rafale dans le mode de fonctionnement en test.
